# EUROPÄISCHE PATENTANMELDUNG

(11) **EP 1 439 080 A1**
(43) Veröffentlichungstag der Anmeldung: **21.07.2004**
(21) Anmeldenummer: 04450010.6
(22) Anmeldetag: 15.01.2004
(51) Int. Cl.: B60C 27/06, B60C 27/10

(54) **Gleitschutzkette**

(30) Priorität: 15.01.2003 AT 452003
(71) Anmelder: PEWAG AUSTRIA GmbH, A-8010 Graz (AT)
(72) Erfinder: Agyd, Pengg, 8661 Wartberg (AT)
(74) Vertreter: Matschnig, Franz, Dipl.-Ing.

(57) **Zusammenfassung**

Eine Gleitschutzkette mit einem Laufnetz (LAU) und einem mit diesem verbundenen Innenseitenstrang (SEI), der in montierten Zustand an einer inneren Seitenflanke (FLA) eines Reifens (REI) anliegt, wobei der Innenseitenstrang (SEI) an seinen beiden Enden je einen Verschlussteil (VE1, VE2) aufweist, die beiden Verschlussteile (VE1, VE2) miteinander verbindbar sind, und das Laufnetz (LAU) in einem montierten Zustand an der Außenseite des Reifens (REI) gespannt ist, wobei zwei einander gegenüberliegende Endabschnitte des Innenseitenstranges je als gekrümmte, langgezogene, starre Bügel (BU1, BU2) ausgebildet sind, an deren freien Enden je ein Verschlussteil (VE1, VE2) angeordnet ist.

## Beschreibung

Die Erfindung betrifft eine Gleitschutzkette mit einem Laufnetz und einem mit diesem verbundenen Innenseitenstrang, der in montierten Zustand an einer inneren Seitenflanke eines Reifens anliegt, wobei der Innenseitenstrang an seinen beiden Enden je einen Verschlussteil aufweist, die beiden Verschlussteile miteinander verbindbar sind, und das Laufnetz in einem montierten Zustand an der Außenseite des Reifens gespannt ist.

Viele Lastkraftfahrzeuge weisen sogenannte Zwillingsräder auf. Die Montage von Gleitschutzketten auf ein Rad eines Zwillingsrades ist infolge des geringen Abstandes zwischen den beiden Reifen wesentlich erschwert.

Momentan finden im wesentlichen drei Systeme von LKW-Gleitschutzketten Verwendung. Die bekannten Lösungen lassen sich in Netzketten, Bügelketten und Seilketten einteilen.

Bei den sogenannten Netzketten wird ein Kettennetz auf eine Fahrbahn aufgelegt. Hierauf fährt das Fahrzeug auf die Kette, woraufhin das Netz geschlossen und gespannt wird. Nach kurzer Fahrt ist es jedoch erforderlich das Netz nachzuspannen.

Bügelketten weisen einen an der Radinnenflanke anliegenden Bügel auf, der oftmals als Federstahlring ausgebildet ist, auf. Zur Montage wird der Bügel auseinandergezogen und über einen Reifen gelegt. Mit einer Spannkette kann der Bügel über ein Rollensystem geschlossen werden. Zur weiteren Montage muss das Fahrzeug ein kurzes Stück rollen, sodass ein Verschluss der Kette von der Fahrbahn abgewandt zu liegen kommt, woraufhin die Kette nachgespannt werden kann.

Bei den Seilketten wird ein Seil hinter dem Rad vorbeigeführt, mit den beiden Seilenden wird die Kette hinter dem Reifen angehoben. Die Seilenden werden sodann an der Radoberseite nach vorne gezogen und ein an den Seilenden angeordneter Verschluss geschlossen, worauf der Seilring an der Radoberseite auf die Radinnenseite geschoben wird. Die Kette wird sodann an der Radvorderseite oben und unten geschlossen und gespannt, nach kurzer Fahrt muss das Netz nachgespannt werden. Bei diesem System ist insbesondere von Nachteil, dass es sich nicht für die Montage bei Zwillingsreifen eignet, da der zur Verfügung stehende Raum zwischen den beiden Reifen üblicherweise nicht ausreicht, um das Seil und die Kette zwischen den Reifen durchzuführen.

Nachteilig an den bekannten Gleitschutzketten ist es, dass sie zum einen bei einer Zwillingsbereifung nur schwierig oder überhaupt nicht, dies gilt insbesondere für Seilketten, zu montieren sind. Zum anderen ist mit den bekannten Systemen eine Montage der Gleitschutzkette am Stand nicht möglich, da zum Anlegen einer der bekannten Ketten an einem Rad eine Lageveränderung des Rades notwendig ist.

Es ist daher eine Aufgabe, der Erfindung die soeben genannten Nachteile des Stands der Technik zu überwinden.

Diese Aufgabe wird mit einer Gleitschutzkette der eingangs genannten Art erfindungsgemäß dadurch gelöst, dass zwei einander gegenüberliegende Endabschnitte des Innenseitenstranges je als gekrümmte, langgezogene, starre Bügel ausgebildet sind, an deren freien Enden je ein Verschlussteil angeordnet ist.

Die erfindungsgemäße Lösung erlaubt eine einfache Montage einer Gleitschutzkette auch bei einer Zwillingsbereifung. Zur Montage kann die Gleitschutzkette über einen Reifen gelegt werden, sodass die beiden Verschlussteile des Innenseitenstrangs auf einander gegenüber liegenden Seiten der Reifenauflagefläche zu liegen kommen. Ein Bügel kann zwischen den Zwillingsrädern eingeschoben werden. Der zwischen den Rädern des Zwillingsreifens liegende Bügel kann beispielsweise mittels eines Montagehakens aufgenommen und der Verschlussteil des anderen Endes mit dem Verschlussteil des Bügels in Eingriff gebracht werden. Bei einer anderen Variante kann der Verschlussteil über ein Führungsseil mit dem Verschlussteil des Bügels in Eingriff gebracht werden.

Es ist weiters ein Verdienst der Erfindung eine Standmontage der Kette zu ermöglichen. Somit kann die Gleitschutzkette vollständig montiert werden, ohne das Fahrzeug bewegen zu müssen. Damit ist auch eine Montage der Kette möglich, wenn das Fahrzeug bereits "hängen" geblieben ist. Für kurze Strecken ist auch eine Fahrt ohne ein Nachspannen der Kette möglich. Die Kette sitzt dann nur etwas lockerer am Reifen.

Gegenüber den oben genannten Netzketten weist die erfindungsgemäße Lösung den Vorteil auf, dass keine Manipulation der beim Überfahren zum Zweck der Montage schmutzig gewordenen Kette mehr erforderlich ist. Ein Auffahren des Fahrzeuges auf die Kette entfällt ebenfalls.

Im Hinblick auf Bügelketten entfällt bei der Erfindung eine störungsanfällige Umlenkung einer Spannkette über Rollen an der Hinterseite des Rades und eine Spannkettenführung über die Lauffläche.

Hinsichtlich der Seilketten weist die erfindungsgemäße Lösung den Vorteil auf, dass sie sich besonders gut für die Montage auf einem Rad eines Zwillingsreifen eignet.

Vorteilhafterweise ist der Krümmungsradius des zumindest einen Bügels größer oder gleich einem mittleren Radius der Seitenflanke.

Eine günstige Variante der Erfindung sieht vor, dass der zumindest eine Bügel an dem Laufrad einen Winkelbereich von zumindest 10° abdeckt, wobei der zumindest eine Bügel vorzugsweise an dem Laufrad einen Winkelbereich zwischen 20° und 50° abdeckt.

Der zumindest eine Bügel liegt im montierten Zustand im wesentlichen im äußeren, radialen Drittel der Radflanke an.

Eine besonders einfache Verbindung der beiden Bügel lässt sich dadurch realisieren, dass ein erster auf dem ersten Bügel angeordneter Verschlussteil als Auge und ein zweiter an dem zweiten Bügel angeordneter Verschlussteil als Haken ausgebildet ist.

Die Erfindung samt weiterer Vorteile wird im Folgenden anhand einiger nicht einschränkenden Ausführungsbeispiele näher erläutert, welche in der Zeichnung dargestellt sind. In dieser zeigen schematisch:
Fig. 1 ein Rad mit einer Variante einer erfindungsgemäßen Gleitschutzkette in montiertem Zustand in einer seitlichen Ansicht;
Fig. 2 ein Verschluss der Gleitschutzkette aus Fig. 1 im näheren Detail;
Fig. 3 die Gleitschutzkette aus Fig. 1 mit geöffnetem Verschluss und
Fig. 4 die beiden bügelförmigen Endabschnitte eines Innenseitenstranges der Gleitschutzkette aus Fig. 1 in einer seitlichen Ansicht.

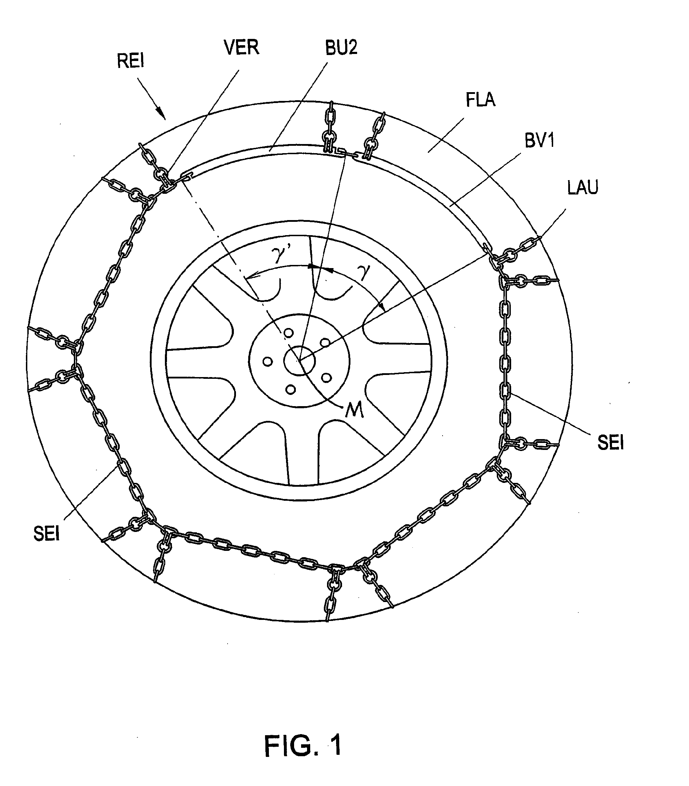

Gemäß Fig. 1-3 weist eine erfindungsgemäße Gleitschutzkette ein Laufnetz LAU und einen mit dem Laufnetz LAU verbundenen Innenseitenstrang SEI auf, der in einem montiertem Zustand der Kette an einer inneren Seitenflanke FLA eines Reifens REI anliegt. Die Gleitschutzkette kann an der hier nicht dargestellten Außenseite des Reifens REI mittels einer beliebigen Spannvorrichtung bzw. einer Spannkette etc. gespannt sein. Der Innenseitenstrang SEI ist in der hier dargestellten Variante der Erfindung an seinen beiden Endabschnitten als langgezogener, gekrümmter Bügel BU1, BU2 ausgebildet, wobei die beiden Bügel je einen Verschlussteil VE1, VE2 aufweisen. Durch Verbinden der beiden Verschlussteile VE1, VE2 kann der Innenseitenstrang SEI zu einem "Ring" geschlossen werden.

Unter langgezogen wird in dem vorliegenden Zusammenhang verstanden, dass die Längserstreckung eines Bügels BU1, BU2 im Verhältnis zu seiner Breite groß ist. Beispielsweise kann das Verhältnis der Längserstreckung zu dem größten normal auf die Längserstreckung verlaufenden Durchmesser eines Bügels BU1, BU2 zwischen 8: 1 und 20:1 betragen.

Der Innenseitenstrang SEI kann an seinem zwischen den beiden Bügeln BU1, BU2 liegenden Abschnitt sowohl als Kette als auch als Seil, beispielsweise als kunststoffummanteltes Stahlseil ausgebildet sein.

Um eine optimale Lage der Bügel BU1, BU2 bzw. des Innenseitenstranges SEI in einem montierten Zustand zu gewährleisten, kann der Krümmungsradius der Bügel BU1, BU2 mindestens einem mittleren Radius der Seitenflanke FLA in einer im wesentlichen normal zur Lauffläche und parallel zum einem montierten Seitenstrang SEI verlaufenden Ebene entsprechen, wobei der Krümmungsradius der Bügel BU1, BU2 jedoch den maximalen Wert des Radius der Seitenflanke FLA nicht überschreitet.

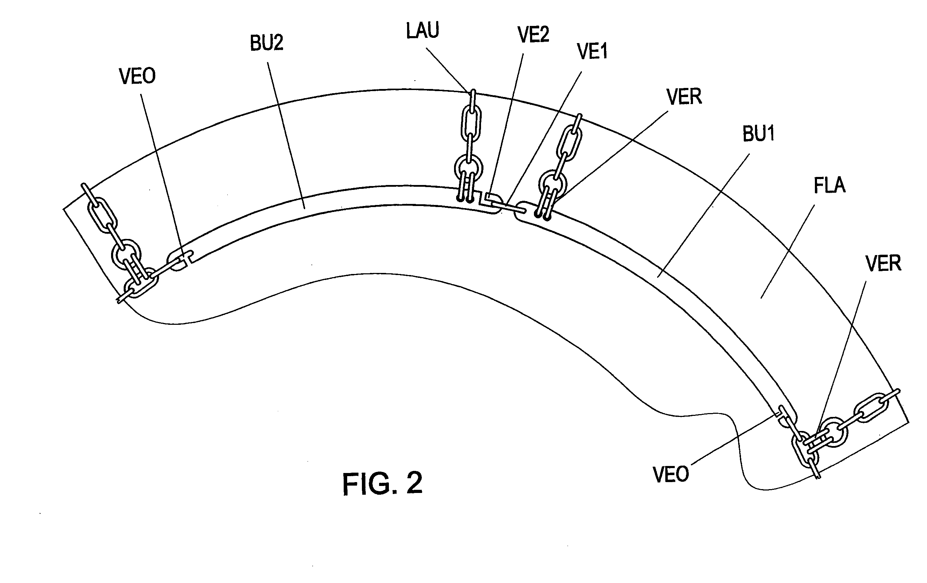

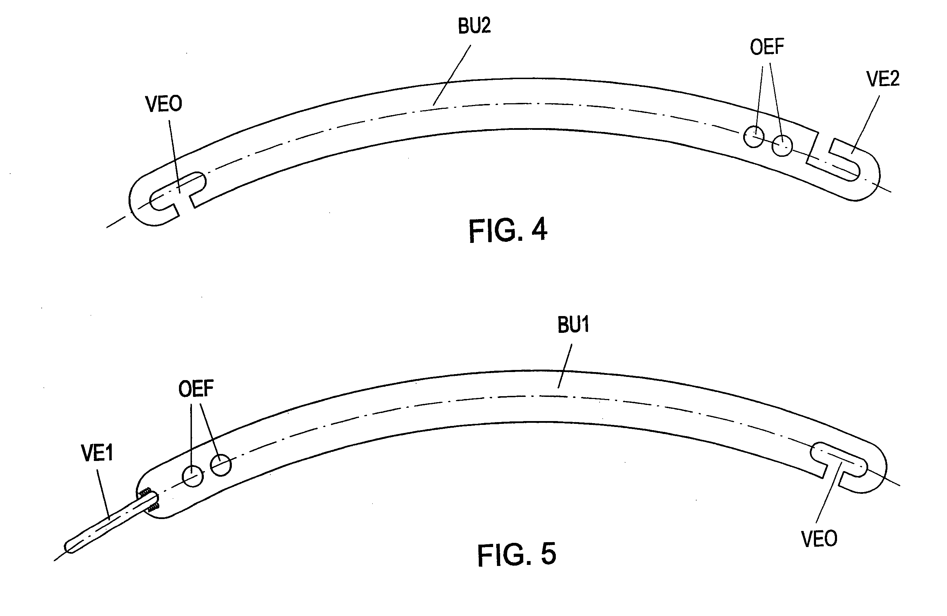

In einem montierten Zustand liegen die Bügel BU1, BU2 im wesentlichen im äußeren Drittel der Radflanke FLA an. Die Bügel BU1, BU2 können gemäß Fig. 4 und 5 an ihren einander zugewandten Endbereichen Öffnungen OEF aufweisen durch welche Verbindungsglieder VER geführt sein können, über welche die Bügel BU1, BU2 an das Laufnetz LAU angebunden sind. An ihren einander abgewandten Enden können die Bügel BU1, BU2 jeweils Öffnungen VEO aufweisen mit denen sie an den restlichen Seitenstrang SEI angebunden sind (Fig. 2).

Die längsseitigen Enden eines Bügels und der Mittelpunkt M des Reifens REI bilden je ein Dreieck, wobei der einem Bügel BU1, BU2 gegenüberliegende Winkel γ, γ' des jeweiligen Dreiecks zumindest 10° und günstigerweise maximal 100° beträgt. Bevorzugterweise liegt der Winkel γ, γ jedoch zwischen 20° und 50°. Auf diese Weise lässt sich eine ausreichende Längserstreckung des Bügels BU1, BU2 für eine komfortable und einfache Montage gewährleisten.

Um den Innenseitenstrang SEI zu schließen werden die beiden an den Bügeln BU1, BU2 angeordneten Verschlussteile VE1, VE2 miteinander verbunden. Eine besonders gut zu handhabende Ausführungsform der Erfindung sieht vor, dass ein erster auf dem ersten Bügel BU1 angeordneter Verschlussteil VE1 als Auge und ein zweiter an dem zweiten Bügel BU2 angeordneter Verschlussteil VE2 als Haken ausgebildet ist.

In der hier dargestellten Ausführungsform der Erfindung ist eine Verschlussöse an einem freien Ende des ersten Bügels BU1 angeordnet. Hierbei liegt die Öffnung des Auges bzw. der Öse in einer im wesentlichen normal zur Längserstreckung des Bügels BU1 verlaufenden Ebene, wobei das freie Ende des zweiten Bügels BU2 einen Haken bzw. eine mit der Öffnung in Eingriff bringbare bzw. verhakbare Haltenase aufweist.

Prinzipiell sind jedoch auch andere miteinander verhakbare Verschlussformen denkbar. So kann der erste Bügel BU1 einen seine Seitenflanke durchsetzende Ausnehmung aufweisen, in welche ein Halteabschnitt des zweiten Bügels BU2 eingreifen kann. Gemäß der hier gezeigten Ausführungsform weisen die beiden Bügel BU1, BU2 jeweils eine plattenförmige Basis auf, sodass die Bügel BU1, BU2 sichelförmig ausgebildet sind. Es sind jedoch auch andere Ausführungsformen der Bügel BU1, BU2 denkbar, beispielsweise als Rundstahlbügel. So kann ein Bügel beispielsweise auch durch ein biegesteifes Stahlseil ersetzt sein.

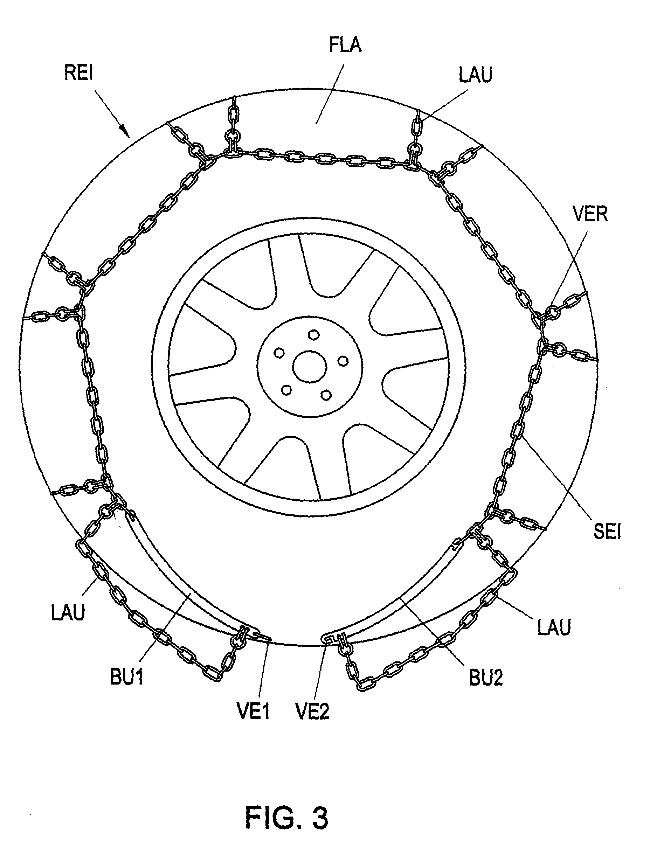

Wie Fig. 1 und 3 weiters zu entnehmen ist, kann der Innenseitenstrang SEI durch die Verbindungselemente VER zu dem Laufnetz LAU in Segmente unterteilt sein. Ist dies der Fall, so besteht eine vorteilhafte Variante der Erfindung darin, dass sowohl das Anfangs als auch das Endsegment des Seitenstranges SEI durch je einen Bügel BU1, BU2 ersetzt werden bzw. als Bügel ausgebildet sind.

Die erfindungsgemäße Lösung erlaubt eine einfache Montage einer Gleitschutzkette, insbesondere bei LKW's. Es sei jedoch an dieser Stelle darauf hingewiesen, dass die erfindungsgemäße Gleitschutzkette prinzipiell für alle Arten von bereiften Fahrzeugen, wie PKW's, Geländefahrzeuge und LKW's, mit und ohne Zwillingsbereifung, geeignet ist.

Gemäß einer weiteren Ausführungsform ist es jedoch auch möglich, dass nur ein Endabschnitt des Innenseitenstranges SEI als Bügel BU1 ausgebildet ist. In diesem Fall kann das andere Ende des Innenseitenstrangs SEI als Seil, beispielsweise als biegesteifes Stahlseil ausgebildet sein, an dessen Ende sich der zweite Verschlussteil VE2 befindet. Diese Variante der Erfindung ist von der Handhabung und Montage im wesentlichen gleich, wie die Variante mit zwei Bügeln BU1, BU2.

Zur Montage der Gleitschutzkette wird, die Kette von außen über den Reifen REI gelegt, sodass die Bügeln BU1, BU2 symmetrisch an einander gegenüberliegenden Seiten der Reifenauflagefläche herabhängen. Somit befindet sich in diesem Stadium der Montage der Anfang des Kettennetzes auf der einen Seite der Reifenauflagefläche und das Ende des Kettennetzes auf der anderen Seite der Reifenauflagefläche. Ein erster Bügel BU1 kann nun an der Radhinterseite, bis sein Ende im wesentlichen auf einer Radmittelebene zu liegen kommt, entlanggeführt werden. Unter Zuhilfenahme eines stabförmigen Montagehakens, kann der erste Bügel BU1 so positioniert werden, dass der Verschlussteil VE2 des zweiten Bügels BU2 mit dem Verschlussteil VE1 des ersten Bügels BU1 leicht in Eingriff gebracht werden kann. Die Verwendung eines Montagehakens oder eines anderen Hilfsmittels ist zwar nicht unbedingt erforderlich erleichtert aber die Montage. Anstelle eines Montagehakens kann auch ein Seilstück an dem freien Ende eines Bügels montiert sein, um ein einfaches Schließen des Verschlusses zu ermöglichen.

Nach Verbinden der beiden Bügel BU1, BU2 und Schließen des Innenseitenstranges SEI kann das Kettennetz an der Vorderseite geschlossen und gespannt werden. Die derartig montierte Gleitschutzkette weist bereits in diesem Montagestadium im Gegensatz zu den bekannten Lösungen ihre vollen Traktionseigenschaften auf.

Nach kurzer Fahrt kann das Netz nachgespannt werden, um einen optimalen Sitz der Kette zu gewährleisten und die bei der Montage durch die Reifenauflage bedingte Freistelle im Laufnetz zu schließen.

## Patentansprüche

1. Gleitschutzkette mit einem Laufnetz (LAU) und einem mit diesem verbundenen Innenseitenstrang (SEI), der in montierten Zustand an einer inneren Seitenflanke (FLA) eines Reifens (REI) anliegt, wobei der Innenseitenstrang (SEI) an seinen beiden Enden je einen Verschlussteil (VE1, VE2) aufweist, die beiden Verschlussteile (VE1, VE2) miteinander verbindbar sind, und das Laufnetz (LAU) in einem montierten Zustand an der Außenseite des Reifens (REI) gespannt ist, **dadurch gekennzeichnet, dass** zwei einander gegenüberliegende Endabschnitte des Innenseitenstranges je als gekrümmte, langgezogene, starre Bügel (BU1, BU2) ausgebildet sind, an deren freien Enden je ein Verschlussteil (VE1, VE2) angeordnet ist.

2. Gleitschutzkette nach Anspruch 1, **dadurch gekennzeichnet, dass** der Krümmungsradius des zumindest einen Bügels (BU1, BU2) größer oder gleich einem mittleren Radius der Seitenflanke (FLA) ist.

3. Gleitschutzkette nach Anspruch 1 oder 2, **dadurch gekennzeichnet, dass** der zumindest eine Bügel an dem Laufrad einen Winkelbereich von zumindest 10° abdeckt.

4. Gleitschutzkette nach Anspruch 3, **dadurch gekennzeichnet, dass** der zumindest eine Bügel an dem Laufrad einen Winkelbereich zwischen 20° und 50° abdeckt.

5. Gleitschutzkette nach einem der Ansprüche 1 bis 4, **dadurch gekennzeichnet, dass** der zumindest eine Bügel (BU1, BU2) im montierten Zustand im wesentlichen im äußeren, radialen Drittel der Radflanke (FLA) anliegt.

6. Gleitschutzkette nach einem der Ansprüche 1 bis 5, **dadurch gekennzeichnet, dass** ein erster auf dem ersten Bügel (BU1) angeordneter Verschlussteil (VE1) als Aug ausgebildet ist, und ein zweiter an dem zweiten Bügel (BU2) angeordneter Verschlussteil (VE2) als Haken ausgebildet ist.
